# EUROPÄISCHE PATENTANMELDUNG

(11) **EP 4 303 354 A1**
(43) Veröffentlichungstag der Anmeldung: **10.01.2024**
(21) Anmeldenummer: 23180678.7
(22) Anmeldetag: 21.06.2023
(51) Int. Cl.: D06F 33/34, D06F 39/08, D06F 39/10, D06F 103/68, D06F 105/00, D06F 105/02

(54) **WASCHMASCHINE UND VERFAHREN ZUM BETRIEB EINER WASCHMASCHINE**

(30) Priorität: 05.07.2022 DE 102022206864
(71) Anmelder: E.G.O. Elektro-Gerätebau GmbH, 75038 Oberderdingen (DE)
(72) Erfinder: Di Maggio, Antonio, 74193 Schwaigern (DE); Schaumann, Uwe, 75038 Oberderdingen (DE)
(74) Vertreter: Patentanwälte Ruff, Wilhelm, Beier, Dauster & Partner mbB

(57) **Zusammenfassung**

Eine Waschmaschine weist einen Trommelaufnahmebehälter und eine drehbare Trommel darin und eine Wasserführung auf, welche einen Wassereinlass von einer externen Wasserzufuhr in die Waschmaschine, Wasserleitungen und Ventile sowie einen Wasserauslass aus der Waschmaschine aufweist. Es sind eine Eintragvorrichtung für Wasser in die Trommel, ein Behälterauslass unten am Trommelaufnahmebehälter, eine Pumpe, ein Filter und eine Waschmaschinensteuerung vorgesehen. Die Wasserführung weist eine verstellbare Druckmindervorrichtung auf, die zwischen einerseits dem Wassereinlass in die Waschmaschine und andererseits der Pumpe und/oder der Eintragvorrichtung angeordnet ist. Die Druckmindervorrichtung ist zur Verstellung mit der Waschmaschinensteuerung verbunden.

## Beschreibung

### ANWENDUNGSGEBIET UND STAND DER TECHNIK

Die Erfindung betrifft eine Waschmaschine sowie ein Verfahren zum Betrieb einer solchen Waschmaschine.

Aus der WO 2005/003268 A1 ist eine Waschmaschine mit einem sogenannten Umflutsystem bekannt, bei welcher Wasser in eine in einem Trommelaufnahmebehälter angeordnete Trommel nicht von außen durch teilweises Fluten des Trommelaufnahmebehälters eingebracht wird, sondern durch eine Drehachse hindurch direkt in die Trommel. Somit kann im unteren Bereich des Trommelaufnahmebehälters geringerer Wasserstand vorgesehen sein. Dadurch kann eine Schaumbildung reduziert werden.

Aus der EP 726349 A2 ist eine Waschmaschine bekannt mit nur einer Pumpe. Daraus resultiert eine Problematik für den sicheren Betrieb der Pumpe, da Luft oder Schaum in der Waschmaschine einen robusten Betrieb erschweren bzw. damit ein diskontinuierlicher Betrieb nur eingeschränkt möglich ist.

### AUFGABE UND LÖSUNG

Der Erfindung liegt die Aufgabe zugrunde, eine eingangs genannte Waschmaschine sowie ein eingangs genanntes Verfahren zu deren Betrieb zu schaffen, mit denen Probleme des Standes der Technik gelöst werden können und es insbesondere möglich ist, eine Waschmaschine effizient betreiben zu können und vorzugsweise beim Betrieb der Waschmaschine mit nur einer Pumpe bspw. die Entlüftung zu gewährleisten, so dass keine spezielle Pumpenkonstruktion notwendig wird.

Gelöst wird diese Aufgabe durch eine Waschmaschine mit den Merkmalen des Anspruchs 1 sowie durch ein Verfahren zu deren Betrieb mit den Merkmalen des Anspruchs 12. Vorteilhafte sowie bevorzugte Ausgestaltungen der Erfindung sind Gegenstand der weiteren Ansprüche und werden im Folgenden näher erläutert. Dabei werden manche der Merkmale nur für die Waschmaschine oder für das Verfahren beschrieben. Sie sollen jedoch unabhängig davon sowohl für eine solche Waschmaschine als auch für als ein solches Verfahren selbständig und unabhängig voneinander gelten können. Der Wortlaut der Ansprüche wird durch ausdrückliche Bezugnahme zum Inhalt der Beschreibung gemacht.

Die Waschmaschine weist eine Trommel zum Waschen von Wäsche darin und einen Trommelaufnahmebehälter auf, in dem die Trommel drehbar angeordnet ist. Sie weist auch eine Wasserführung auf, die ihrerseits einen Wassereinlass von einer externen Wasserzufuhr in die Waschmaschine, Wasserleitungen und Ventile, einen Wasserauslass aus der Waschmaschine, eine Eintragvorrichtung für Wasser in die Trommel und einen Behälterauslass unten am Trommelaufnahmebehälter aufweist. Des Weiteren weist die Waschmaschine eine Pumpe auf, die mittels Wasserleitungen einerseits mit dem Behälterauslass und andererseits mit der Eintragvorrichtung verbunden ist, sowie einen Filter zum Filtern von durch ihn hindurchfließendem Wasser. Sie weist noch eine Waschmaschinensteuerung auf, mit der die Pumpe verbunden ist, evtl. auch noch einen Antriebsmotor samt Umrichter zum Ansteuern des Antriebsmotors.

Erfindungsgemäß weist die Wasserführung eine verstellbare Druckmindervorrichtung auf, die zwischen einerseits dem Wassereinlass in die Waschmaschine und andererseits der Pumpe und/oder der Eintragvorrichtung angeordnet ist. Die Druckmindervorrichtung ist zu ihrer Verstellung oder Einstellung mit der Waschmaschinensteuerung verbunden und bekommt von dieser Befehle, vorteilhaft kann sie ihren Zustand auch an diese zurückmelden. Druckmindervorrichtungen an einer Waschmaschine sind bekannt, sie dienen dazu, den Wasserdruck von in die Waschmaschine einströmendem Wasser zu begrenzen. So können die Waschmaschine und insbesondere ihre Wasserführung sowie ggf. auch eine Pumpe vor zu hohem Wasserdruck geschützt werden. Die Begrenzung erfolgt fix auf einen Wert, der üblicherweise fest zwischen 2 bar und 3 bar eingestellt ist. Dies reicht aus, um Wasser mit ausreichend Druck und ausreichendem Durchfluss in die Waschmaschine einzulassen.

Mit der Erfindung wird es möglich, den Wasserdruck von in die Waschmaschine einströmendem Wasser einstellen zu können, damit er an mögliche Abschnitte im Verlauf eines Waschverfahrens angepasst werden kann. Soll nur Wasser in die Waschmaschine eingelassen werden so kann ein relativ geringer Druck ausreichen, beispielsweise die vorgenannten 2 bar bis 3 bar. Wird der Wasserdruck höher eingestellt, vorteilhaft 5 bar bis 8 bar, falls die externe Wasserzufuhr dies erlaubt, so kann damit auch eine Funktion wie beispielsweise ein Spülen, Reinigen bzw. Rückspülen des Filters in der Wasserführung durchgeführt werden. Ein Einsatz der Pumpe hierfür ist dann nicht notwendig bzw. eine Pumpe kann einfacher ausgebildet sein, so dass sie nicht unbedingt derart hohe Wasserdrücke erzeugen können muss. Das vereinfacht die Ausgestaltung der Wasserführung und insbesondere der Pumpe, zusätzlich kann ggf. Energie eingespart werden.

Vorteilhaft kann die Druckmindervorrichtung zwischen dem Wassereinlass in die Waschmaschine und weiteren Bereichen der Wasserführung angeordnet sein, insbesondere vor dem Filter und vor der Pumpe. So kann mit relativ hohem Druck eingelassenes Wasser sowohl allgemein gefiltert werden als auch zum Rückspülen oder Reinigen des Filters verwendet werden. Der Wassereinlass kann zu dem Filter geführt sein, insbesondere direkt, wobei vorzugsweise zwischen der Druckmindervorrichtung und dem Filter nur eine Wasserleitung angeordnet ist, die frei von einem Ventil ist bzw. kein Ventil darin aufweist. Ein Ventil kann vor der einstellbaren Druckmindervorrichtung angeordnet sein, insbesondere um die gewünschte Wassermenge einzulassen. Ein Drucksensor kann auch vorgesehen sein, vorteilhaft vor und/oder hinter der Druckmindervorrichtung. So kann die Waschmaschinensteuerung Informationen zum maximal möglichen Wasserdruck sowie zum eingestellten Wasserdruck erhalten. Unter Umständen kann ein Drucksensor in die Druckmindervorrichtung integriert sein.

In vorteilhafter Ausgestaltung der Erfindung kann in der Druckmindervorrichtung ein Rückschlagventil enthalten sein. Dieses Rückschlagventil lässt das durchfließende Fluid oder Gas zusätzlich zur Drosselung in der Fließrichtung des Wassers in die entgegengesetzte Richtung nicht zurück fließen. Dadurch wird der Druck verringert und gleichzeitig ein Rückstrom in den Wassereinlass oder in die Wasserzuführung verhindert.

Die Druckmindervorrichtung kann fest eingestellt oder regelbar sein.

Es ist möglich, dass die Wasserführung für sich mindestens einen Drucksensor aufweist, welcher vorzugsweise in dem Trommelaufnahmebehälter angeordnet sein kann. Er kann hier im unteren Bereich des Trommelaufnahmebehälters an oder nahe dem Behälterauslass angeordnet sein.

Der Filter kann in einer Wasserleitung zwischen dem Behälterauslass und der Pumpe angeordnet sein. So können aus der Wäsche austretende Fremdkörper oder Verunreinigungen, die aus dem Wasser herausgefiltert werden sollen, vor der Pumpe herausgefiltert werden. Dies dient zum Schutz der Pumpe.

Der Filter kann vorteilhaft einen Filtereinlass, einen Filterauslass und einen Rückspüleinlass aufweisen. Die Druckmindervorrichtung kann mittels einer Wasserleitung ohne Ventil direkt mit dem Rückspüleinlass verbunden sein, sodass es möglich ist, dass sie den Filter zu seiner Reinigung rückspült. Dies kann vor allem an dieser Stelle bewirken, dass zum Rückspülen des Filters die Druckmindervorrichtung den Druck sehr hoch und maximal einstellt, sodass ein Rückspülen und Reinigen des Filters mit möglichst hohem Wasserdruck erfolgen kann. Dann wird eine Pumpe der Waschmaschine nicht zusätzlich gebraucht, es kann ausschließlich mit einem möglicherweise am Wassereinlass aufgrund einer Gebäudeleitung vorhandenem hohem Wasserdruck gearbeitet werden. Dies schont die Pumpe und spart Energie. Des Weiteren kann so die Pumpe möglicherweise einfacher aufgebaut werden, da sie keine für ein Rückspülen eines Filters benötigten hohen Drücke aufbauen können muss.

In Weiterbildung der Erfindung kann zwischen dem Behälterauslass und dem Filter bzw. dem Filtereinlass ein Ventil angeordnet sein, insbesondere kann dies ein Zwei-Wege-Ventil sein. So kann der Filter sozusagen geschlossen werden. Alternativ kann dieses Ventil auch direkt am Behälterauslass angeordnet sein.

In nochmaliger Weiterbildung der Erfindung kann hinter dem Filterauslass und insbesondere in einer Wasserleitung von dem Filterauslass zu der Pumpe ein Ventil angeordnet sein, welches insbesondere ein erstes Drei-Wege-Ventil sein kann. Es ist möglich, dass ein Anschluss dieses ersten Drei-Wege-Ventils mittels Wasserleitungen an die Eintragvorrichtung geführt ist, wobei ein anderer Anschluss an die vorgenannte Pumpe geführt sein kann.

Bevorzugt kann noch vorgesehen sein, dass hinter dem Anschluss des ersten Drei-Wege-Ventils hin zu der Eintragvorrichtung ein weiteres zweites Drei-Wege-Ventil angeordnet ist. Es ist möglich, dass ein Anschluss dieses weiteren zweiten Drei-Wege-Ventils hin zur Eintragvorrichtung geführt ist bzw. mit ihr verbunden ist. Der andere Anschluss dieses weiteren zweiten Drei-Wege-Ventils kann vorteilhaft zu der Pumpe geführt sein.

Besonders bevorzugt kann hinter dem anderen Anschluss des zweiten Drei-Wege-Ventils zu der Eintragvorrichtung ein weiteres drittes Drei-Wege-Ventil angeordnet sein, wobei dessen einer Anschluss zu dem Wasserauslass aus der Waschmaschine geführt ist. Dessen anderer Anschluss kann zu der Eintragvorrichtung geführt sein.

In Weiterbildung der Erfindung kann die Waschmaschine, insbesondere in der Wasserführung, einen Durchflusssensor aufweisen. Ein solcher Durchflusssensor kann vorteilhaft am Wassereinlass in die Waschmaschine angeordnet sein, besonders vorteilhaft am Eingang des Wassereinlasses in ein Gehäuse der Waschmaschine. Ein Abstand zu einem Wasseranschluss außen am Gehäuse, insbesondere in Form eines Schnellanschlusses oder Schraubanschlusses, alternativ zu einer Außenwand des Gehäuses, kann kleiner als 15 cm sein, vorteilhaft kleiner als 5 cm. So kann genau erfasst werden, wie viel Wasser in die Waschmaschine eingelassen worden ist. Damit ist auch die Wassermenge in der Waschmaschine bekannt.

Die Waschmaschine kann eine Dosiervorrichtung für eine Zudosierung von Waschmittel oder sonstigen Stoffen, allgemein waschaktiven Substanzen, für Wäschebehandlung in der Waschmaschine aufweisen. Diese Dosiervorrichtung kann in der Wasserleitung vor der Pumpe angeordnet sein, insbesondere zwischen dem Filter und der Pumpe. Sie kann einen Abstand von weniger als 30 cm oder weniger als 20 cm zu der Pumpe aufweisen.

Vorteilhaft kann die Waschmaschine eine Heizeinrichtung für Wasser in der Wasserführung aufweisen, wobei die Heizeinrichtung entweder getrennt von der Pumpe ausgebildet ist und insbesondere in einem Abstand zwischen 5 cm und 30 cm zu der Pumpe angeordnet ist oder gemeinsam mit der Pumpe ausgebildet ist bzw. in die Pumpe integriert ist. Hierfür wird beispielsweise auf die DE 10 2011 079 510 A1 verwiesen. Eine separate Heizeinrichtung kann vor der Pumpe oder auch hinter der Pumpe angeordnet sein.

Die Druckmindervorrichtung kann vorteilhaft in einer eigenständig handhabbaren Baueinheit innerhalb des unteren Bereichs der Waschmaschine angeordnet sein, welche als Baueinheit bewegbar ausgebildet ist. Eine derartige Baueinheit kann beispielsweise als eine Art Schublade ausgebildet sein, in der als eine Art Funktionsmodul mehrere Funktionseinheiten der Waschmaschine, unter anderem eben die Druckmindervorrichtung, insbesondere auch noch Wasserleitungen, eine Pumpe, ein Ventil und vorzugsweise ein Filter angeordnet sind. Somit sind es im Wesentlichen die wasserführenden komplexen Funktionseinheiten der Waschmaschine. Die Wasserleitungen können zumindest teilweise längenveränderlich sein. Dies ist vorteilhaft entsprechend der DE 102021204201 A1, deren Inhalt diesbezüglich durch ausdrückliche Bezugnahme zum Inhalt der vorliegenden Anmeldung gemacht wird.

Bei einem erfindungsgemäßen Verfahren zum Betrieb einer erfindungsgemäßen Waschmaschine, wie sie zuvor beschrieben worden ist, wird zu Beginn ihres Betriebs ein definierter Wasserdruck eingestellt mittels der Druckmindervorrichtung. Dieser definierte Wasserdruck kann zwischen 1,5 bar und 4 bar liegen, insbesondere zwischen 1,8 bar und 2,5 bar. So kann entsprechend einer Programmvorgabe für den Betrieb Wasser mit diesem Wasserdruck von der externen Wasserzufuhr über einen Wassereinlass in die Waschmaschine geleitet werden. In einem weiteren Verfahrensschritt kann der Filter rückgespült werden, wozu mittels der Druckmindervorrichtung ein Wasserdruck von mindestens 5 bar, vorzugsweise 7 bar bis zu einem Maximaldruck einer externen Anschlussleitung oder Gebäudeleitung, eingestellt werden kann. So kann auf zuvor genannte Art und Weise sehr einfach und ohne aufwändigen Einsatz einer Pumpe der Filter effizient und mit hohem Wasserdruck rückgespült und damit gereinigt werden.

Zum Rückspülen des Filters kann in Ausgestaltung der Erfindung der Wasserdruck um mindestens 50% variiert werden, vorzugsweise mindestens alle 0,5 sec bis 10 sec um mindestens 50% variiert werden. Insbesondere kann der Wasserdruck stoßartig bzw. pulsartig variiert werden. Dadurch ist es besonders gut möglich, in dem Filter enthaltene und insbesondere herausgefilterte Partikel oder Verunreinigungen, die festgesetzt sind, zu lösen und beim Rückspülen herauszuspülen.

In einem weiteren Verfahrensschritt für einen Waschvorgang mit mehrfachem Einbringen von Wasser mittels der Eintragvorrichtung in die Trommel wird mittels der Druckmindervorrichtung ein Wasserdruck zwischen 2 bar und 3 bar eingestellt. Dies kann ein vorteilhafter Wasserdruck zum Betrieb der Waschmaschine sein, wenn nicht die beispielsweise für das Rückspülen des Filters ein sehr hoher oder möglichst hoher Wasserdruck gewünscht ist.

In Ausgestaltung der Erfindung kann mittels der verstellbaren Druckmindervorrichtung der Wasserdruck beim Befüllen der Trommel mit Wasser erhöht werden für den Fall, dass die Trommel zuvor mittels der Pumpe entleert worden ist. Dabei kann der Wasserdruck vorzugsweise erhöht werden bis auf einen Maximaldruck einer Anschlussleitung am Wassereinlass.

In Weiterbildung der Erfindung kann bei entleerter Pumpe und vor einem Start des Betriebs der Pumpe Wasser in die Pumpe bzw. in deren Pumpenkammer eingelassen werden mit einem Wasserdruck, der über dem üblichen Wasserdruck für einen Waschvorgang liegt. Hierfür kann vorteilhaft mittels der verstellbaren Druckmindervorrichtung ein Wasserdruck von mindestens 5 bar eingestellt werden. Dazu kann der Wasserdruck in der Wasserführung bzw. des am Wassereinlass in die Waschmaschine eingelassenen Wassers mittels der Druckmindervorrichtung nicht reduziert oder gemindert werden, die Druckmindervorrichtung wird also sozusagen vollständig geöffnet.

In vorteilhafter Ausgestaltung der Erfindung können bei dem Verfahren folgende Schritte durchgeführt werden. Innerhalb von maximal 5 sec, vorzugsweise gleichzeitig, mit einem Einstellen des Wasserdrucks kann ein Ventil am Wassereinlass geöffnet werden. Ein Ventil zwischen dem Filter und dem Behälterauslass wird geöffnet bzw. ist bereits geöffnet, während ein Ventil zwischen dem Filter und der Pumpe geschlossen wird bzw. ist geschlossen. Anschließend wird der Filter in den Trommelaufnahmebehälter hinein entlüftet bzw. durch den Behälterauslass entlüftet, wobei dabei vorgesehen sein kann, dass kein Wasserfluss durch die Pumpe erfolgt. Dann wird das Ventil zwischen dem Filter und der Pumpe geöffnet, und danach wird die Pumpe durch geöffnete Ventile und Wasserleitungen in die Trommel oder in den Trommelaufnahmebehälter hinein entlüftet und mit Wasser durch den Filter hindurch befüllt. Dabei kann Wasser von der Pumpe in einem Kreislauf durch die Pumpe hindurch umgepumpt werden, ohne dass das Wasser in den Trommelaufnahmebehälter bzw. in die Trommel gelangt. Vorteilhaft kann dies so gemacht werden, dass das Wasser nicht in den Filter gelangt, wobei dabei das Wasser mittels einer Heizeinrichtung, an der das Wasser vorbei strömen, beheizt wird. Nach Erreichen einer gewünschten Temperatur kann dann das aufgeheizte Wasser durch geöffnete Ventile und Wasserleitungen in die Trommel oder in den Trommelaufnahmebehälter hinein eingebracht werden.

Es kann vorgesehen sein, dass zum Entleeren der Waschmaschine ein Ventil zwischen Behälterauslass und Filter geschlossen wird, wobei über eine Wasserleitung und ein Ventil Frischwasser in die Trommel oder in den Trommelaufnahmebehälters eingebracht wird, um die Trommel zu spülen. Dann kann ein Ventil hinter der Pumpe geschlossen werden, so dass eine Wasserleitung von diesen Ventil zu einem weiteren Ventil, das zwischen Filter und Pumpe angeordnet ist, offen ist und gespült wird. Dabei kann nach dem Spülen dieser Wasserleitung das Ventil hinter der Pumpe so eingestellt werden, dass das Wasser, mit dem gespült worden ist, aus der Trommel durch die Pumpe über eine Wasserleitung und ein weiteres Ventil zum Wasserauslass aus der Waschmaschine gepumpt werden kann.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränkt die unter diesen gemachten Aussagen nicht in ihrer Allgemeingültigkeit.

### KURZBESCHREIBUNG DER ZEICHNUNGEN

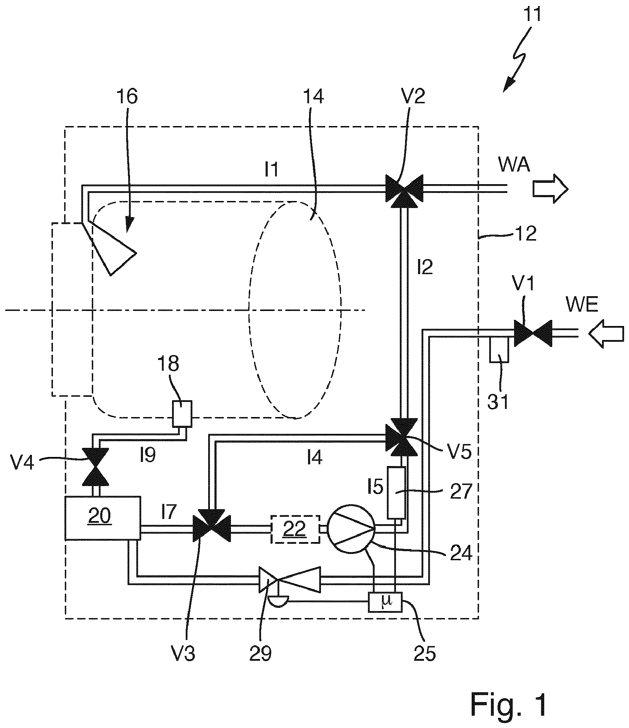

Weitere Vorteile und Aspekte der Erfindung ergeben sich aus den Ansprüchen und aus der Beschreibung von Ausführungsbeispielen der Erfindung, die nachfolgend anhand der Figur erläutert sind. Dabei zeigt die Fig. 1 schematisch eine Waschmaschine mit innerem Aufbau und eine Wasserführung mit Leitungen sowie einem Druckminderer.

### DETAILLIERTE BESCHREIBUNG DER AUSFÜHRUNGSBEISPIELE

Die Fig. 1 zeigt eine Waschmaschine 11 mit einem Gehäuse 12, in dem ein Trommelaufnahmebehälter 14 mit einer nicht dargestellten Trommel, in der Wäsche gewaschen wird, angeordnet ist. Unten an dem Trommelaufnahmebehälter 14 mit einem Behälterauslass zu einer Wasserleitung I9 folgt ein Ventil V4, dem ein Filter 20 nachgeordnet ist. Vor dem Filter 20 geht eine Wasserleitung I7 zu einem Drei-Wege-Ventil V3. Dessen einer Ausgang geht zu einer Dosiereinrichtung 22 und dann zu einer Pumpe 24. Deren Ausgang ist mittels einer Wasserleitung I5 mit einer Heizung 27 versehen und führt zu einem weiteren Drei-Wege-Ventil V5. Dessen einer Ausgang geht mittels einer Wasserleitung I4 zurück zu dem Drei-Wege-Ventil V3.

So kann ein zuvor beschriebener Kreislauf gebildet werden, in dem die Pumpe 24 Wasser im Kreis bzw. im Kreislauf umpumpen kann, bevorzugt, um es mittels der Heizung 27 langsam auf eine gewünschte Temperatur zu erwärmen.

Vor dem Ventil V5 geht eine Wasserleitung I2 zu einem weiteren Drei-Wege-Ventil V2. Dessen rechter Ausgang bildet einen Wasserauslass WA aus der Waschmaschine 11. Dessen linker Ausgang führt mittels einer Wasserleitung 11 zu einer Eintragvorrichtung 16 für Wasser in den Trommelaufnahmebehälter 14 bzw. in die Trommel hinein.

Ein Wassereinlass in die Waschmaschine 11 erfolgt vor einer externen Anschlussleitung, vorteilhaft als flexibler Schlauch, von einer Gebäudeleitung, wie dies aus dem Stand der Technik bekannt ist. Am Wassereinlass ist üblicherweise ein Schraubanschluss vorgesehen, häufig mit einer Water-Stop-Vorrichtung. Hier ist ein Durchflusssensor 31 vorgesehen, mit dem erfasst werden kann, wieviel Wasser vom Ventil V1 am Wassereinlass WE in die Waschmaschine 11 bzw. in deren Wasserführung eingelassen worden ist. Eine Wasserleitung I6 führt zu dem Filter 20 bzw. zu einem Rückspüleinlass des Filters 20. So kann möglichst direkt am Filter 20 ein möglichst hoher Wasserdruck zum Rückspülen anliegen. In dieser Wasserleitung I6 ist ein verstellbarer Druckminderer 29 entsprechend der Erfindung angeordnet. Der Druckminderer 29 wird von einer Steuerung 25 angesteuert, welche mit sämtlichen beeinflussbaren bzw. steuerbaren Funktionseinheiten der Waschmaschine 11 verbunden ist, hier dargestellt ist eine Verbindung zu der Pumpe 24 und zu der Heizung 27. Vorteilhaft ist die Steuerung 25 auch mit den Ventilen, dem Drucksensor 18, der Dosiereinrichtung 22 und dem Durchflusssensor 31 verbunden zu deren Ansteuerung.

Das Einstellen des Druckminderers 29 erfolgt wie zuvor erläutert, beispielsweise ein Druck von 2 bar für den normalen Waschvorgang. Damit ist ein Schutz des Gerätes möglich sowie ein definierter Druck in der Waschmaschine 11 unabhängig von einem im Gebäude vorgegebenen Wasserdruck möglich. Auch dessen Betrieb bzw. dessen Verstellung, insbesondere ein Einstellen bzw. Durchlassen eines möglichst hohen Wasserdrucks, vorteilhaft zum Rückspülen des Filters 20, erfolgt wie zuvor beschrieben. Anhand der Fig. 1 ist dies leicht vorstellbar. Beim Rückspülen herausgespülte Verunreinigungen können über das Ventil V3, die Wasserleitung I4, das Ventil V5 samt der Wasserleitung I2 und das Ventil V2 zum Wasserauslass WA aus der Waschmaschine 11 entfernt werden.

Mit dem Start des Betriebs der Waschmaschine 11 wird das Ventil V1 geöffnet und über den Druckminderer ein definierter Druck eingestellt, zum Beispiel 2 bar. Damit ist ein Schutz der Waschmaschine 11 möglich und ein definierter Druck im System unabhängig von der Gebäudeinstallation vorhanden. Der Druckminderer 29 kann von der Steuerung 25 angesteuert werden.

Um zum Start eine Entlüftung sicherzustellen ist das Ventil V4 offen. Das Ventil V3 ist in Richtung Pumpe 24 geschlossen. Die Leitung 19 erlaubt die Entlüftung des Filters 20 und der Leitung I9 über den Trommelaufnahmebehälter 14. Das Wasser steigt bis zum Einlass der Leitung I9 am Trommelaufnahmebehälter 14.

Bei der anschließenden Inbetriebnahme wird die Pumpe 24 durch die Leitung I7, nachdem Ventil V3, V5 und V2 offen sind, mit Wasser befüllt. Luft kann über die Leitung I5 in den Trommelaufnahmebehälter 14 gedrückt werden. Aufgrund des Volumens im Filter 20 und in I9 ist ausreichend Wasser für das Füllen bzw. Fluten der Pumpe 24 und der Leitungen I4 und I5 vorhanden. Anschließend werden V3 und V5 so eingestellt, dass ein Kreislauf um die Pumpe 24 entsteht mit den Leitungen I5 und I4 sowie durch die Ventile V3 und V5. Die Pumpe 24 kann eingeschaltet werden und das Wasser beginnt zu zirkulieren. Die Heizung 27 kann dabei gefahrlos eingeschaltet werden, da ein "Trockenlauf" mit dem Risiko eines zu starken Aufheizens nicht mehr möglich ist.

Nach Erreichen der gewünschten Temperatur kann das Ventil V5 geöffnet werden und Wasser kann in den Trommelaufnahmebehälter 14 geführt werden. Damit kann ein definiertes Volumen mit entsprechender Temperatur über die Eintragvorrichtung 16 in die Trommel bzw. in den Trommelaufnahmebehälter 14 gebracht werden. Der beschriebene Vorgang kann mehrfach wiederholt werden, bis eine gewünschte Benetzung oder Durchfeuchtung von Wäsche in der Trommel erreicht ist.

Je nach Beladungsmenge der Trommel mit Wäsche wird der Vorgang mehrfach wiederholt, bis sichergestellt werden kann, dass ein Rückfluss aus dem Trommelaufnahmebehälter 14 möglich ist, da die Wasseraufnahme der Wäsche deren Sättigung erreicht hat. Dies kann mittels Sensoren oder mittels Erfahrungswerten erfasst werden. Dann kann auf eine kontinuierliche Umflutung umgestellt werden. Eine gewünschte Temperatur in der Trommel bzw. auf der Wäsche ist einstellbar, da die Verhältnisse der Waschmaschinenkonstruktion wie auch Umgebungstemperatur usw. bekannt sind, so dass die Temperaturführung in dem Kreislauf durch die Pumpe 24 und die Leitungen I5 und I4 entsprechend je Zyklus angepasst werden kann.

Statt einem diskontinuierlichen Betrieb kann auch ein kontinuierlicher Betrieb für die Benetzung der Wäsche erfolgen. Das Ventil V1 wird entsprechend geöffnet, so dass Wasser so lange nachströmen kann, bis die Wäsche benetzt ist und ein Rückfluss aus der Trommel erkannt wird bzw. das berechnete Wasservolumen (aufgrund Beladungsmenge, Textilart, etc....) erreicht ist. Eine genaue Temperaturführung auf der Wäsche wie beim diskontinuierlichen Betrieb ist denkbar, aber deutlich schwieriger zu regeln. V4 ist hierbei geschlossen, damit kein Wasser über den Filter 20 in den Trommelaufnahmebehälter 14 gelangt. Mit dem Öffnen des Ventil V1 kann über den Druckminderer 29 ein definierter Druck eingestellt werden, zum Beispiel 2 bar, so dass das Volumen aufgrund der Vorgabe aus der Berechnung bekannt ist.

Zum Beginn des Waschens wird das Ventil V1 am Wassereinlass WE so lange offengelassen, wie es aufgrund der konstruktiven Ausführung notwendig ist, um das entsprechende Volumen an Wasser bereitstellen zu können. Dabei kann ein diskontinuierlicher oder kontinuierlicher Betrieb vorgenommen werden wie zuvor beschrieben. Da sich in der Trommel die Wäsche befindet, saugt diese so lange Wasser auf bis der Drucksensor 18, der sich am Trommelaufnahmebehälter 14 befindet anspricht. Alternativ kann über die gemessene Wassermenge und das Wäschegewicht das notwendige Volumen bestimmt werden. Je nach Textilart ist ein anderes Aufnahmevermögen zu beachten, weshalb hierfür auch der Drucksensor für eine entsprechende Abschaltung verwendet werden kann.

Mit der beschriebenen Ausführung kann die Wäsche auch von unten her durchfeuchtet werden, was im Kern den aktuellen Waschverfahren (Rippenschöpfsystem) entspricht, wo das Wasser über die Wachmittelschublade von oben in den Bottich und damit die Trommel fließt. Da der Filter einfach nach jedem Waschprozess gereinigt werden kann, findet keine Verschmutzung der Wäsche statt.

Wird das Umflutverfahren bevorzugt, um so wenig wie möglich Wasser vorzusehen, dreht sich die Trommel und das Wasser wird über die Eintragvorrichtung 16 auf die Wäsche in der Trommel gebracht. Um hier ein Abschalten und damit eine zu große Menge an Wasser im Prozess zu verhindern, kann der Wasserrücklauf ebenfalls über den Drucksensor 18 erkannt werden bzw. zur Optimierung über einen zusätzlichen Trübungssensor in der Leitung I7 (nicht in der Fig. 1 gezeigt). Die Funktion des Trübungssensors dient zur Überwachung des Filters 20. Die Änderung von Luft zu Wasser kann mit einem Trübungssensor zusätzlich erkannt werden. Alternativ kann eine Leitfähigkeitsmessung parallel vorgesehen werden, die neben Prozessparametern auch den Wasserrückfluss erkennen kann. Über die Temperaturüberwachung ist ebenfalls eine Erkennung des Wasserrückflusses möglich.

Eine weitere Lösung liegt in der Verwendung einer Pumpe, die mit einem Inverter angesteuert wird und über deren Stromkennlinie Luft in der Pumpe erkennen kann. Diese Lösung ist jedoch für einfache Pumpen nicht möglich. Sobald die ausreichende Menge für den Waschprozess vorliegt, kann der Waschprozess weiter durchgeführt werden mit der entsprechenden Dosierung.

Wird im Waschprozess Wasser abgepumpt, so wird dies über das Ventil V2 erreicht. Dabei werden die Leitungen I7 und I5 nicht vollständig geleert, da eine zeitliche Begrenzung über die Rückmeldung des Drucksensors 18 und ggf. des Trübungssensors möglich ist. Die Zufuhr von Frischwasser kann im Falle einer entsprechenden Rückkopplung der beiden Sensoren permanent erfolgen, bis ein stabiler Zustand vorliegt. Die Befüllung mit Frischwasser nach dem Zwischenschleudern ist analog zur Inbetriebnahme möglich. Dabei ist die Position des Ventils V4 gleich.

Ein Entleeren der Waschmaschine 11 am Ende des Waschprozesses kann über die Pumpe 24 als komplette Entleerung des Systems erfolgen, was eine Reduzierung der Verkeimung darin erlaubt. Soll auch eine Reinigung erfolgen so kann diese nach der Entleerung der Waschmaschine 11 erfolgen. Das Ventil V4 wird geschlossen, so dass die Trommel von der Wasserführung getrennt ist. Über V2 kann Frischwasser zum Spülen und evtl. vorher Reinigungsmittel über die Dosiereinrichtung 22 eingebracht werden. Dabei wird V5 so geschlossen, dass die Leitung I4 offen ist. Nach dem Spülen der Leitung I4 wird V5 so eingestellt, dass die Leitung I2 das Wasser über V2 nach außen führt. Dabei wird die Pumpe 24 kontinuierlich gespült. Neben dem Durchspülen können der Filter 20 und die Pumpe 24 auch für eine gewisse Einwirkzeit mit Wasser und entsprechenden Reinigungsmitteln geflutet werden, was die Reinigungswirkung verbessert.

## Patentansprüche

1. Waschmaschine mit:
- einer Trommel zum Waschen von Wäsche darin,
- einer Trommelaufnahmebehälter, in dem die Trommel drehbar angeordnet ist,
- einer Wasserführung die aufweist:
+ einen Wassereinlass von einer externen Wasserzufuhr in die Waschmaschine,
+ Wasserleitungen und Ventile,
+ einen Wasserauslass aus der Waschmaschine,
+ eine Eintragvorrichtung für Wasser in die Trommel,
+ einen Behälterauslass unten am Trommelaufnahmebehälter,
+ eine Pumpe, die mittels Wasserleitungen einerseits mit dem Behälterauslass und andererseits mit der Eintragvorrichtung verbunden ist,
+ einen Filter zum Filtern von hindurchfließendem Wasser,
+ einer Waschmaschinensteuerung, mit der die Pumpe verbunden ist,
**dadurch gekennzeichnet, dass**:
- die Wasserführung eine verstellbare Druckmindervorrichtung aufweist,
- die Druckmindervorrichtung zwischen einerseits dem Wassereinlass in die Waschmaschine und andererseits der Pumpe und/oder der Eintragvorrichtung angeordnet ist,
- die Druckmindervorrichtung zur Verstellung mit der Waschmaschinensteuerung verbunden ist.

2. Waschmaschine nach Anspruch 1, **dadurch gekennzeichnet, dass** die Druckmindervorrichtung zwischen dem Wassereinlass in die Waschmaschine und weiteren Bereichen der Wasserführung angeordnet ist, insbesondere vor dem Filter und vor der Pumpe, wobei vorzugsweise der Wassereinlass zu dem Filter geführt ist und zwischen der Druckmindervorrichtung und dem Filter nur eine Wasserleitung frei von einem Ventil angeordnet ist.

3. Waschmaschine nach Anspruch 1 oder 2, **dadurch gekennzeichnet, dass** die Wasserführung mindestens einen Drucksensor aufweist, vorzugsweise in dem Trommelaufnahmebehälter, insbesondere im unteren Bereich des Trommelaufnahmebehälters an oder nahe dem Behälterauslass.

4. Waschmaschine nach einem der vorhergehenden Ansprüche, **dadurch gekennzeichnet, dass** die Wasserführung einen Durchflusssensor aufweist, vorzugsweise am Wassereinlass in die Waschmaschine, insbesondere am Eingang des Wassereinlasses in ein Gehäuse der Waschmaschine.

5. Waschmaschine nach einem der vorhergehenden Ansprüche, **dadurch gekennzeichnet, dass** der Filter in einer Wasserleitung zwischen dem Behälterauslass und der Pumpe angeordnet ist.

6. Waschmaschine nach einem der vorhergehenden Ansprüche, **dadurch gekennzeichnet, dass** der Filter einen Filtereinlass, einen Filterauslass und einen Rückspüleinlass aufweist, wobei vorzugsweise die Druckmindervorrichtung mittels einer Wasserleitung ohne Ventil direkt mit dem Rückspüleinlass verbunden ist, wobei insbesondere zwischen dem Behälterauslass und dem Filter bzw. dem Filtereinlass ein Ventil angeordnet ist, insbesondere ein Zwei-Wege-Ventil.

7. Waschmaschine nach Anspruch 6, **dadurch gekennzeichnet, dass** hinter dem Filterauslass und insbesondere in einer Wasserleitung von dem Filterauslass zu der Pumpe ein Ventil angeordnet ist, insbesondere ein erstes Drei-Wege-Ventil, wobei vorzugsweise ein Anschluss des ersten Drei-Wege-Ventils mittels Wasserleitungen an die Eintragvorrichtung geführt ist, wobei insbesondere ein anderer Anschluss an die Pumpe geführt ist.

8. Waschmaschine nach Anspruch 7, **dadurch gekennzeichnet, dass** hinter dem Anschluss des ersten Drei-Wege-Ventils hin zu der Eintragvorrichtung ein weiteres zweites Drei-Wege-Ventil angeordnet ist, vorzugsweise dessen einer Anschluss hin zur Eintragvorrichtung geführt ist und dessen anderer Anschluss zu der Pumpe geführt ist, wobei insbesondere hinter dem anderen Anschluss des zweiten Drei-Wege-Ventils zu der Eintragvorrichtung ein weiteres drittes Drei-Wege-Ventil angeordnet ist, wobei dessen einer Anschluss zu dem Wasserauslass aus der Waschmaschine geführt ist und dessen anderer Anschluss zu der Eintragvorrichtung geführt ist.

9. Waschmaschine nach einem der vorhergehenden Ansprüche, **dadurch gekennzeichnet, dass** sie eine Dosiervorrichtung für eine Zudosierung von Waschmittel oder sonstigen Stoffen für Wäschebehandlung in der Waschmaschine aufweist, wobei die Dosiervorrichtung in der Wasserleitung vor der Pumpe angeordnet ist, insbesondere zwischen dem Filter und der Pumpe, vorzugsweise mit einem Abstand von weniger als 30 cm oder weniger als 20 cm zu der Pumpe.

10. Waschmaschine nach einem der vorhergehenden Ansprüche, **dadurch gekennzeichnet, dass** sie eine Heizeinrichtung für das Wasser in der Wasserführung aufweist, wobei vorzugsweise die Heizeinrichtung getrennt von der Pumpe ausgebildet ist und insbesondere in einem Abstand zwischen 5 cm und 30 cm zu der Pumpe angeordnet ist.

11. Waschmaschine nach einem der vorhergehenden Ansprüche, **dadurch gekennzeichnet, dass** die Druckmindervorrichtung in einer eigenständig handhabbaren Baueinheit innerhalb des unteren Bereichs der Waschmaschine angeordnet ist und als Baueinheit bewegbar ausgebildet ist, wobei insbesondere in der bewegbaren Baueinheit Wasserleitungen, eine Pumpe, ein Ventil und vorzugsweise ein Filter angeordnet sind.

12. Verfahren zum Betrieb einer Waschmaschine nach einem der vorhergehenden Ansprüche, **dadurch gekennzeichnet, dass**
- zu Beginn eines Betriebs der Waschmaschine mittels der Druckmindervorrichtung ein definierter Wasserdruck eingestellt wird, der zwischen 1,5 bar und 4 bar liegt, insbesondere zwischen 1,8 bar und 2,5 bar, um entsprechend einer Programmvorgabe Wasser mit diesem Wasserdruck von der externen Wasserzufuhr in die Waschmaschine zu leiten,
- in einem weiteren Verfahrensschritt der Filter rückgespült wird und dazu mittels der Druckmindervorrichtung ein Wasserdruck von mindestens 5 bar, vorzugsweise 7 bar bis zu einem Maximaldruck einer Anschlussleitung, eingestellt wird,
- in einem weiteren Verfahrensschritt für einen Waschvorgang mit mehrfachem Einbringen von Wasser mittels der Eintragvorrichtung in die Trommel mittels der Druckmindervorrichtung ein Wasserdruck zwischen 2 bar und 3 bar eingestellt wird.

13. Verfahren nach Anspruch 12, **dadurch gekennzeichnet, dass** zum Rückspülen des Filters der Wasserdruck um mindestens 50% variiert wird, vorzugsweise mindestens alle 0,5 sec bis 10 sec um mindestens 50% variiert wird, insbesondere derart variiert wird, dass der Wasserdruck stoßartig bzw. pulsartig variiert wird.

14. Verfahren nach Anspruch 12 oder 13, **dadurch gekennzeichnet, dass** mittels der Druckmindervorrichtung der Wasserdruck beim Befüllen der Trommel mit Wasser erhöht wird für den Fall, dass die Trommel zuvor mittels der Pumpe entleert worden ist, vorzugsweise erhöht wird bis auf einen Maximaldruck einer Anschlussleitung am Wassereinlass.

15. Verfahren nach Anspruch 12 oder 13, **dadurch gekennzeichnet, dass** bei entleerter Pumpe und vor einem Start des Betriebs der Pumpe Wasser in die Pumpe bzw. in deren Pumpenkammer eingelassen wird mit einem Wasserdruck, der über dem Wasserdruck für einen Waschvorgang liegt, wobei insbesondere hierfür mittels der Druckmindervorrichtung ein Wasserdruck von mindestens 5 bar eingestellt wird, wobei vorzugsweise hierfür mittels der Druckmindervorrichtung der Wasserdruck in der Wasserführung bzw. des am Wassereinlass in die Waschmaschine eingelassenen Wassers nicht reduziert oder gemindert wird.

16. Verfahren nach Anspruch 14 oder 15, **gekennzeichnet durch** folgende Schritte:
- innerhalb von maximal 5 sec, vorzugsweise gleichzeitig, mit einem Einstellen des Wasserdrucks wird ein Ventil am Wassereinlass geöffnet,
- ein Ventil zwischen dem Filter und dem Behälterauslass wird geöffnet bzw. ist geöffnet und ein Ventil zwischen dem Filter und der Pumpe wird geschlossen bzw. ist geschlossen,
- der Filter wird entlüftet in den Trommelaufnahmebehälter hinein bzw. durch den Behälterauslass, wobei vorzugsweise dabei kein Wasserfluss durch die Pumpe erfolgt,
- dann wird das Ventil zwischen dem Filter und der Pumpe geöffnet,
- dann wird die Pumpe durch geöffnete Ventile und Wasserleitungen in die Trommel oder in den Trommelaufnahmebehälter hinein entlüftet und mit Wasser durch den Filter hindurch befüllt,
- Wasser wird von der Pumpe in einem Kreislauf durch die Pumpe hindurch umgepumpt, ohne dass das Wasser in den Trommelaufnahmebehälter bzw. in die Trommel gelangt, vorzugsweise auch ohne dass das Wasser in den Filter gelangt, wobei dabei das Wasser mittels einer Heizeinrichtung, an der das Wasser vorbeiströmt, beheizt wird,
- nach Erreichen einer gewünschten Temperatur wird das aufgeheizte Wasser durch geöffnete Ventile und Wasserleitungen in die Trommel oder in den Trommelaufnahmebehälter hinein eingebracht.

17. Verfahren nach einem der Ansprüche 12 bis 16, **dadurch gekennzeichnet, dass** zum Entleeren der Waschmaschine ein Ventil zwischen Behälterauslass und Filter geschlossen wird, wobei über eine Wasserleitung und ein Ventil Frischwasser in die Trommel eingebracht wird, um die Trommel zu spülen, wobei dann ein Ventil hinter der Pumpe geschlossen wird, so dass eine Wasserleitung von diesen Ventil zu einem weiteren Ventil, das zwischen Filter und Pumpe angeordnet ist, offen ist und gespült wird, wobei vorzugsweise nach dem Spülen dieser Wasserleitung das Ventil hinter der Pumpe so eingestellt wird, dass das Wasser durch die Pumpe über eine Wasserleitung und ein weiteres Ventil zum Wasserauslass aus der Waschmaschine gepumpt werden kann.
